Europäisches Patentamt

European Patent Office

Office européen des brevets

(11) Publication number: **0 462 642 A1**

# EUROPEAN PATENT APPLICATION

(21) Application number: 91201352.1

(51) Int. Cl.⁵: **G08B 17/107**, G01N 21/53

(22) Date of filing: 04.06.91

(30) Priority: 21.06.90 NL 9001415

(43) Date of publication of application:
27.12.91 Bulletin 91/52

(84) Designated Contracting States:
AT BE CH DE DK ES FR GB GR IT LI NL SE

(71) Applicant: AJAX DE BOER B.V.
P.O.Box 4105
NL-1009AC Amsterdam(NL)

(72) Inventor: van Nieuwkoop, Johannes, Drs.
Ericaduin 8
NL-2318 XP Leiden(NL)

(74) Representative: Flamman, Han
LIOC Patents and Licensing P.O. Box 85096
NL-3508 AB Utrecht(NL)

(54) Optical smoke, aerosol and dust detector and fire detector apparatus with optical detector.

(57) Optical smoke, aerosol and dust-detector containing a light-source, emitting light (La) and (Lv) which is polarized and which is scattered by the particles to be detected. The scattered light is detected by sensors, giving rise to signals (S1, S2, S3, S4) which are processed by an electronic device. That device contains a circuit by which the said signals are related to both the concentration, the sizes and the optical qualities of the scattering particles.

EP 0 462 642 A1

Rank Xerox (UK) Business Services

FIGURE 1

The invention relates to an optical smoke, aerosol and dust detector which contains a light source which emits light in a certain direction onto one or more samples with smoke, aerosol or dust particles, and this light is scattered from the said particles, together with a number of photosensitive sensors, which detect the light scattered from one sample, together with an electronic device for processing signals which emanate from the sensors.

Such a detector is known from the Swiss Patent A 591257.

In the known detector at least two sensors are placed at a different angle to the beams emanating from the light source, whereby preferably one sensor is placed in such a manner that this detects the light which is entirely or almost entirely scattered from the extension of the beams which emanate from the light source, and at least one photosensitive sensor is placed in such a way that this detects the light which is scattered in a backward direction by the smoke, aerosol or dust particles.

With the known detector it is possible to detect both black and white smoke, aerosol or dust particles. The signals from the sensors are used in an integral manner in an electrical circuit and offered to a threshold value detector.

There are a number of disadvantages connected to the known optical detector. For example, when an out-signal changes it is not possible, when using a threshold value detector, to know the cause of that change: the signal can change both as a result of a change in the concentration of the particles in the sample which has been examined, and as a result of a change in the composition of the sample, whereby, for example, the ratio between numbers of relatively large and small particles changes.

A second disadvantage, which is connected to this, is that the known detector is not suitable, when applied in fire detecting apparatus, for signalling quantitative and qualitative changes in air samples with smoke particles and registering these as a function of the time. As soon as the signal offered by the optical detector to the detector for the threshold value transgresses a value which has been set in advance (the threshold value) there is a fire alarm. A threshold value which is too low increases the chance of incorrect alarms ('false alarm'), while a threshold value which has been set too high, on the other hand, entails the risk of a fire alarm which is too late.

The aim of the invention is to provide an optical smoke, aerosol and dust detector to which these disadvantages are not connected.

This aim is achieved in accordance with the invention with an optical detector, the electronic design of which contains a circuit with which the signals emanating from the sensors are related to both the concentration and the sizes and optical qualities of the scattered particles.

The invention is based on the insight that by the use of at least two sensors, which measure the scattering of incoming light beams from a gas, more especially air, sample with smoke, aerosol or dust particles under various angles of scattering or angles of polarization, it is in principle possible to follow both the absolute concentration of particles of a particular size and the mutual ratio of the concentrations of particles of particular differing sizes in the sample during the passage of time. This possibility is based, in the case of detection with sensors under differing angles of scattering, on the physical principles of Rayleigh scattering, which are known in themselves. In particular, the Rayleigh Gans relation describes that light with a particular wave length is scattered to the same degree as the diameter of scattering particles in an isotropic manner by those particles, while light with a wave length which is larger than the diameter of scattering particles is mainly scattered in a forward direction. Light with a wave length smaller than the diameter of the scattering particles is scattered to an important degree in a backward or sideward direction.

In an example of an embodiment of a detector according to the invention the light emitted by the light source is polarized in a particular plane, and two sensors detect the light scattered from one sample under the same particular angle in relation to the light entering that sample, whereby the sensors are equipped with a polarization filter for a direction of polarization parallel to and, respectively,

From the signals from the two sensors which are equipped with two polarization filters which are turned at 90° to one another, again by using physical principles of light scattering which are known in themselves, additional information on the composition of the sample is deduced. It is known that the direction of polarization of the light does not change if that light is scattered from spherical particles with a diameter smaller than the wave length of the scattered light, while non-spherical particles do influence the direction of polarization. Using this principle a distinction can be made with a detector according to the invention between fixed particles formed at random and atomizing, spherical liquid particles.

If a detector according to this latter example is furthermore equipped with a third sensor which detects the scattered light, regardless of the polarization situation thereof, under a different angle in relation to the incoming light than the two sensors equipped with a polarization filter, both the polarization qualities of a sample and the shape, the optical absorption and reflection and the concentration of the particles present in a sample can be determined simultaneously.

In a preferred embodiment of this latter detector according to the invention the two sensors equipped with a polarization filter detect the light which is entirely or almost entirely scattered in the extension of the light beams emanating from the light source, and the third sensor detects the light scattered in a backward direction.

In such a detector both of the sensors which are equipped with a polarization filter (differing in direction of polarization) jointly detect the light scattered in a forward direction, and the third sensor detects the light scattered in a backward direction. If the direction of polarization changes as a result of chemical or physical changes in the sample with scattering particles, this is detected by both of the sensors for the forward direction. If, in the case of a particle concentration which remains the same, the size of the particles increases or decreases respectively, the backward light scattering becomes larger or smaller respectively, and the forward scattering becomes smaller or larger respectively, while in a first order approach the total signal which is detected by the sensors for forward and backward scattering remains the same. An increase or a decrease in concentration respectively, on the other hand, leads to an increase or a decrease respectively of the total signal given by the sensors. A change of colour of the particles in the case of constant particle size and concentration to start with only results in a change in the backward light scattering.

The optical detector according to the invention is especially suitable for application in fire detecting apparatus if the electronic device for the processing of the signals emanating from the sensors contains a circuit with which the absolute distribution, more especially the absolute standard deviation, of the average value of the quotient of the signals during the passage of time from two sensors at a time, or (in the case in which two sensors equipped with polarization filters aimed from a different angle of polarization are placed in the same angle of scattering and a third sensor detects the scattered light under a different angle of scattering independent of the direction of polarization) the quotient of the signals which are totalled of two sensors (equipped with a polarization filter) and the signal of a third sensor is determined directly. (The totalling of mutually independent signals (such as those for scattered light in who mutually perpendicular polarization directions) takes place, for example, by determining the root from the sum of the squares of the two independent signals.)

The advantages of such a detector can be easily seen on the basis of a simple model of a design example in which there are two sensors without a polarization filter. If one of the sensors is positioned in such a manner that this delivers a signal $L_a$ which is proportional to the quantity of light scattered in a backward direction, and the other sensor is positioned in such a manner that this delivers a signal $L_v$ which is proportional to the quantity of light scattered in a forward direction, then it can be proved that the ratio $R = L_a/L_v$ is a measurement for the average diameter of the scattering particles. When this detector is applied as a smoke detector one can determine a stationary situation if the distribution, more especially the standard deviation $\Delta R$ of the average value of R which develops as time passes, remains within a certain value (which can be defined as a band width). Transgression of this band width signifies a change in the composition of the scattering particles (even in the case of a constant value of the diameter!) which could be an indication of a fire starting.

In an analogous manner it is possible, with a detector which contains sensors with which the polarization situation of the scattered light is also measured, to use a change in the distribution of the average polarization situation as a criterium in fire detection apparatus. Given two sensors which detect the scattered light in a polarization plane parallel to and, respectively, perpendicular to the polarization plane of the incoming light, then the ratio P of the signals $L\|$ and $L^\perp$ ($P = L\|/L^\perp$) respectively forms a measurement for the polarizing qualities of the scattering particles.

A change in the distribution, more especially the standard deviation $\Delta P$ of the average value of P which develops as time progresses, will then again indicate a change in the composition and/or nature of the sample.

Naturally, with a sensor which contains sensors for both the quantity of backward and forward scattered light and the polarization situation of, for example, the light scattered in a forward direction, values can be determined for $\Delta R$ and $\Delta P$.

A preferred embodiment of the optical detector according to the invention is characterized by the fact that the electronic device contains a circuit, with which the relative distribution, more especially the relative standard deviation of the average value of the quotient of the signals which develop as time progresses of two sensors at a time, or of the quotient of the totalled signals of two sensors and a third sensor, can be directly determined.

With this preferred embodiment it is possible, in terms of the parameter R which was introduced above as a measurement for the average diameter of the scattering parts, to directly determine the relative distribution $\Delta R/R$. This design is especially important when it is applied in a fire detection apparatus.

From phenomenological descriptions of a combustion process in which smoke particles are formed it can be deduced that the relative distribution $\Delta R/R$ in the average value for the diameter of the particles formed is in proportional to the distribution $\Delta T$ in the average value of the temperature $T$ at which the particles are formed. A change in this temperature $T$ is accompanied at the moment of change by a change in $\Delta T$, so that with the optical detector described above, with which $\Delta R/R$ can be determined, when applied in a fire detection apparatus, a temperature change in a potential seat of a fire can also be directly determined.

In a next example of an embodiment the electronic device of the optical detector contains a circuit with which the root from the sum of the squares of the signals from the sensors can be directly determined.

In such a detector it is possible, from the value determined in this manner, to directly deduce the concentration of the scattering particles. The detector can be applied as a threshold value detector. Contrary to the known threshold value detectors, in a detector according to the invention the signals emanating from the sensors are also related to the sizes and the optical qualities of the scattering particles.

The detector can also be applied to measure changes in the concentration of the scattering particles as a function of time, if the electronic device contains a circuit with which the change of the root from the sum of the squares of the signals from the sensors is directly determined as a function of the time.

The invention relates furthermore to a fire detecting apparatus with an optical detector. Such a fire detecting apparatus is known, also from Swiss patent A 591257.

The known fire detecting apparatus makes use of the known optical smoke, aerosol and dust detector, as a result of which it is not possible to register a smoke development which has been signalled in a manner other than in terms of more or less scattering of light by smoke and dust particles in the air sample in the detector.

The aim of the invention is to provide a fire detecting apparatus with which the development of a starting fire can be followed on the basis of the composition of the smoke which develops thereby, in a quantitative and a qualitative sense.

With the optical detector a distinction can be made between relatively small particles which scatter the incoming light from the detector especially in a forward direction, and relatively large particles, which scatter the light in a backward direction, and/or changes in certain optical qualities of the scattering particles can be signalled.

The possibility of the optical detector to deliver information on the size, the concentration and the polarization qualities of the particles are used especially in a preferable design of a fire detector according to the invention, if the light emitted by the light source in the optical detector is polarized in a particular plane, two sensors, under the same angle of scattering, but equipped with two polarization filters which are turned at $90°$ with regard to one another, and a third sensor under another angle of scattering, without a polarization filter, detect the scattered light, and the electronic device contains circuits with which both the distribution $\Delta P$ defined above and the relative distribution $\Delta R/R$ and the root from the sum of the squares of the sensors as a derivative from this latter function according to time are directly determined.

A example of the embodiment of this fire detecting apparatus is characterized by the fact that the values of the root from the sum of the squares of the signals from the sensors, the derived value according to the time thereof, and of the absolute and relative distribution in the quotient of the signals of two sensors at a time are carried to comparator circuits, and the out-signals of these comparator circuits are offered to a logical circuit consisting of 'AND' and 'OR' ports as a warning signal to a fire reporting centre.

The logical circuit is preferably circuited in such a manner that the out-signals from the comparator circuits for the absolute and the relative distribution in the quotient of the signals of two sensors at a time are offered to an OR port, the out-signal of which is offered to an AND port, to which AND port the exit signal for the comparator circuit for the derived value according to time of the root from the sum of the squares of the signals from the sensors is offered, and from which AND port the out-signal is offered to a second OR port, the out-signal of which is also offered to a comparator circuit for the root from the sum of the squares of the sensor signals.

In a fire detecting apparatus according to this latter example an alarm signal is given if either the absolute size of the total signal V for the sensors transgresses a threshold value which has been set in advance, or if one of the parameters $\Delta P$ or $\Delta R/R$, in combination with $dV/dt$, transgress values which have been set in advance.

A further description of the invention will be given below with the aid of drawings.

Fig. 1 shows a vector diagram in order to clarify the origin of the scattered light detected by the sensors in an optical detector.

Fig. 2 shows a block diagram of the electronic circuit of a design example of a fire detecting apparatus according to the invention.

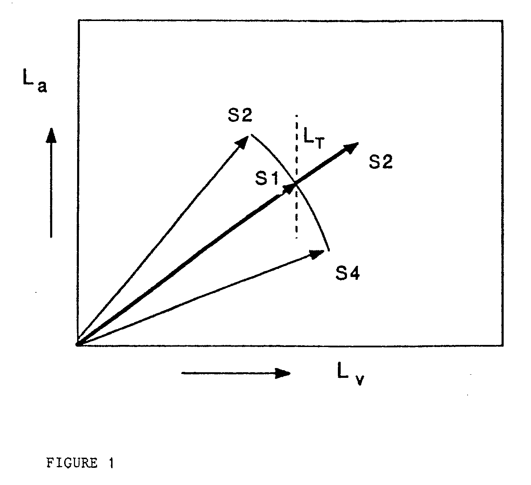

Fig. 1 shows a system of axes, in which the signal $L_v$ is depicted along the horizontal axis, from a sensor which detects the light scattered in a forward direction, and the signal $L_a$ is depicted along the vertical axis, from a sensor which detects the light scattered in a backward direction. The vector $L_T$ represents the total signal from both sensors in a random situation $S_1$, in which particles present in the detector are scattered. If the concentration of particles increases, at a constant average value for the sizes of the particles, the total signal becomes larger ($S_2$), while the ratio $L_a/L_v$ remains the same. In the case of an increase or decrease of the average size of the particles (with a constant concentration) the vector will describe an arc in the direction $S_3$ or $S_4$ respectively. In the case of a colour change of the particles, at a constant concentration and size of the particles, the quantity of light scattered in a forward direction will not change, so that the vector will move along the dotted line upwards (lighter colour, more reflection) or downwards (darker colour, less reflection).

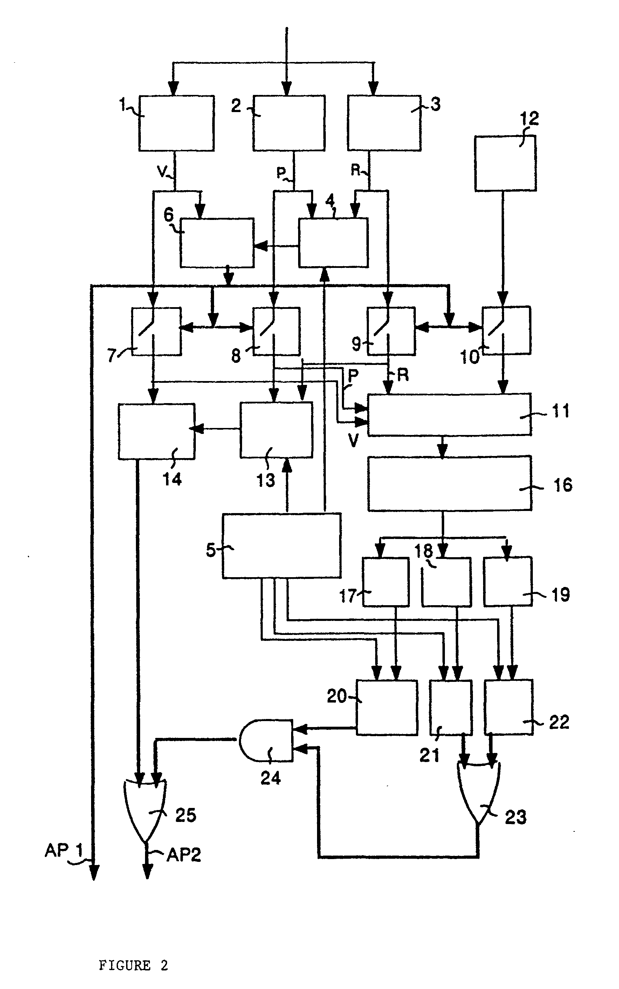

Fig. 2 shows a block diagram of the electronic circuit of a fire detecting apparatus, which contains an optical detector, which detector contains a light source which throws a beam of light which has been polarized in a particular plane onto an air sample, as well as two sensors for detecting the quantity of perpendicular and parallel polarized light scattered in a forward direction, and a sensor without a polarization filter for the backward scattered light. The signals from the sensors are showed by $L_v^\perp$, $L_v\|$ and $L_a$ respectively. These analogous signals are put into a digital form in an analogous/digital converter (not shown here). After this the signals are offered to three function value generator circuits (1,2,3), in which numerical values V, P and R are attributed to respectively the absolute value of the total quantity of scattered light detected by the three sensors, the ratio between the quantities of parallel and perpendicular polarized light scattered in a forward direction, and the ratio between the quantities of backward and forward scattered light. In the formula:

$$V = \sqrt{L_a^2 + L_v^2}, \quad \text{(i)}$$

$$P = L_{v,\|} / L_{v,\perp} \quad \text{(ii)}$$

$$R = L_a / L_v \quad \text{(iii)}$$

In (1) and (3) $L_v$ is given by

$$L_v = \sqrt{L_{v,\|}^2 + L_{v,\perp}^2} \quad \text{(iv)}$$

(in this equation V is therefore to be interpreted as the size of a vector distended by $L_a$ and $L_v$.)

The values R and P are offered to the function value generator (4) in which a threshold value G-(R,P) which is laid down in a programmable memory (5) is generated. In a comparator circuit (6) G-(R,P) is compared with V. If V transgresses the threshold value G(R,P) the ports (7,8,9, 10) are opened and V also becomes available as alarm phase 1 (AP1) for the benefit of a fire reporting centre (not drawn here) Via the ports (7,8,9,10) the values V, R and P are stored in a memory (11) and marked with a time from a real-time clock (RTC) (12) and R and P are offered to a second function value generator (13) in which a threshold value F-(R,P) which has been determined empirically and laid down in a programmable memory (5) is generated. In a comparator circuit (14) F(R,P) is compared with V. If V is larger than the threshold value F(R,P) V is offered to an OR port (15), whereby V becomes available as signal AP2 and alarm phase 2 is entered. The signals V, R and P are offered, after passing a digital filter (16), to circuits (17,18,19), in which respectively the values dV/dt, $\Delta R/R$ and $\Delta P$ are determined. In comparator circuits (20,21,22) the values dV/dt, $\Delta R/R$ and $\Delta P$ are compared with maximum permissible values which have been empirically determined and stored in a programmable memory (5). These maximum permissible values have been determined empirically and are specific to the area in which the fire detector is applied. for a meeting room, for example, in which many cigarettes and cigars are smoked, a different combination will be determined than for an absolutely smoke-free space.

The out-signal from the comparator circuits (21), (22) for $\Delta R/R$ and $\Delta P$ respectively is offered via an OR port (23) to an AND port (24), the same as the out-signal from the comparator circuit (20) for dV/dt. The signal from this AND port (24) is offered to the OR port (25) to which V is also offered in the event of transgression of the threshold value F(R,P).

The fire detecting apparatus described above will therefore, if the size V of the total signal from the sensors in the optical detector transgresses a threshold value G(R,P), give a first warning signal AP1, while in the event that this signal transgresses an empirically established threshold value F(R,P), dependent on R and P, a second warning signal AP2 will be generated. AP2 also arises if the signal V changes too fast as a function of time (dV/dt is larger than a threshold value which has been established) provided that this takes place in combination with a too high value of $\Delta R/R$ or of $\Delta P$.

This fire detector provides a system in which the chance of a 'false alarm' is considerably decreased, while on the other hand, the sensitivity of the fire detector is much higher than that of existing fire detectors based on an optical detector, because not only the absolute signal size V, but also the derivative thereof according to the time dV/dt and also the other values $\Delta R/R$ and $\Delta P$

which have been determined are related to threshold values which have been laid down for the application concerned. Under certain circumstances, for example the slow smouldering of a seat of a fire, it is possible for an alarm to be given the moment the smouldering changes into an open fire, even without the total signal strength V giving an alarm phase 2. As a result of this a fire detecting apparatus according to the invention is especially suitable for application in the most varying forms of "micro climates". In this connection one can think of dust free, conditioned laboratory or computer spaces on the one hand and machine rooms or businesses for machine wood working in the other hand.

## Claims

1. Optical smoke, aerosol and dust detector which contains a light source which emits light in a certain direction onto one or more samples with smoke, aerosol or dust particles, which light is scattered from the said particles, as well as a number of photosensitive sensors which detect the light scattered from a sample, as well as an electronic device for the processing of the signals which emanate from the sensors, with the characteristic, that the electronic device contains a circuit with which the signals emanating from the sensors are related to both the concentration and the sizes and the optical qualities of the scattering particles.

2. Optical detector according to claim 1, with the characteristic, that the light emitted by the light source is polarized in a particular plane and two sensors detect the light scattered from a sample under the same particular angle with regard to the light entering that sample, whereby the sensors are equipped with a polarization filter for a direction of polarization parallel to or respectively perpendicular to that of the emitted light.

3. Optical detector according to claim 2, with the characteristic, that a third sensor, under an angle with regard to the entering light other than that of the two sensors equipped with a polarization filter, detects the scattered light regardless of the polarization situation thereof.

4. Optical detector according to claim 3, with the characteristic, that the two sensors equipped with a polarization filter detect the light which is scattered entirely or almost entirely in the extension of the light beam emitted from the light source, and the third sensor detects the light scattered in a backward direction.

5. Optical detector according to one of the claims 1-4, with the characteristic, that the electronic device contains a circuit with which the absolute distribution, more especially the absolute standard deviation, of the average value as time passes of the quotient of the signals of two sensors at a time, or the quotient of totalled signals from two sensors, and the signal from a third sensor, is directly determined.

6. Optical detector according to one of the claims 1-4, with the characteristic, that the electronic device contains a circuit, with which the relative distribution, more specifically the relative standard deviation, of the average value as time advances of the quotient of the signals of two sensors at a time, or of the quotient of the totalled signals from two sensors, and the signal of a third sensor, are directly determined.

7. Optical detector according to one of the claims 1-4, with the characteristic, that the electronic device contains a circuit with which the sum from the sum of the squares of the signals from the sensors is directly determined.

8. Optical detector according to one of the claims 1-4, with the characteristic, that the electronic device contains a circuit with which the change of the root from the sum of the squares of the signals from the sensors as a function of the time is directly determined.

9. Fire detecting apparatus, based on analysis of an air sample, with the characteristic, that this contains an optical smoke, aerosol and dust detector according to one or more of the claims 5 up to and including 8.

10. Fire detecting apparatus, based on analysis of an air sample, with the characteristic that this contains an optical smoke, aerosol and dust detector according to the claims 3 or 4 and the claims 5 up to and including 8.

11. Fire detecting apparatus according to claim 10, with the characteristic, that the values of the root from the sum of the squares of the signals from the sensors, the derived value therefrom according to the time, and the absolute and relative distribution in the quotient of the signals of two sensors at a time are carried to comparator circuits, and the out-signals from these comparator circuits are offered as a warning signal to a fire reporting centre via a logical circuit consisting of 'AND' and 'OR' ports.

12. Fire detecting apparatus according to claim 11, with the characteristic, that the out-signals from the comparator circuits for the absolute and relative distribution in the quotient of the signals of two sensors at a time are offered to an OR port, the out-signal of which is offered to an 'AND' port, to which 'AND' port the out-signal of the comparator circuit for the derived value according to the time of the root from the sum of the squares of the signals from the sensors is also offered, and from which 'AND' port the out-signal is offered to a second 'OR' port, to which the out-signal of a comparator circuit for the root from the sum of the squares of the sensor signals is also offered.

FIGURE 1

FIGURE 2

# EUROPEAN SEARCH REPORT

Application Number

**EP 91 20 1352**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 901 602   (GRAVATT, Jr.)<br>* Column 1, line 58 - column 2, line 23; column 4, line 25 - column 6, line 27; figures 1-5 * | 1 | G 08 B 17/107<br>G 01 N 21/53 |
| A | | 2-10 | |
| | --- | | |
| X | US-A-3 653 767   (LISKOWITZ)<br>* Column 2, line 58 - column 3, line 3; column 3, lines 40-47; column 3, line 69; column 4, line 30; figures 1-5 * | 1 | |
| A | | 2-8 | |
| | --- | | |
| A | US-A-4 103 997   (MATSUSHITA ELECTRIC WORKS LTD)<br>* Column 2, lines 41-58; column 4, lines 35-61 * | 9-12 | |
| | --- | | |
| A | EP-A-0 055 319   (CO. CENTRALE SICLI)<br>* Page 7, line 23 - page 8, line 5 * | 9-12 | |
| | ----- | | |
| | | | **TECHNICAL FIELDS SEARCHED (Int. Cl.5)**<br><br>G 08 B 17<br>G 01 N 15<br>G 01 N 21 |

The present search report has been drawn up for all claims

| Place of search | Date of completion of search | Examiner |
|---|---|---|
| The Hague | 20 August 91 | CRECHET P.G.M. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

& : member of the same patent family, corresponding document